# EUROPEAN PATENT APPLICATION

(11) **EP 2 471 354 A1**
(43) Date of publication of application: **04.07.2012**
(21) Application number: 10854264.8
(22) Date of filing: 06.08.2010
(51) Int. Cl.: A01G 9/14, A01G 9/20, A01G 9/24

(54) **SOLAR MODULE FOR GREENHOUSE**

(30) Priority: 07.07.2010 CN 201020250267 U
(71) Applicant: Wei Sheng Investment & Development Co., Ltd., Taipei City 10682 (TW)
(72) Inventor: CHEN, Kuei-kuang, Taipei (TW); LIN, Szu-hung, Taipei (TW); LIN, Szu-hai, Taipei (TW)
(74) Representative: Lang, Christian
(86) International application number: PCT/CN2010/001201
(87) International publication number: WO 2012/003604

(57) **Abstract**

A solar module for greenhouse includes a plurality of non-light transmitting solar panels, installed at the top of a greenhouse and arranged vertically and horizontally to form a roof tilted in a particular light receiving direction. A planting area for growing plants is formed inside of the greenhouse and the roof separates the planting area from outside air. Thus, an integrated structure of solar panels and greenhouse is formed to save the construction expense for solar panels and greenhouse and to increase the efficiency for solar panels to receive sun radiation.

## Description

### BACKGROUND

1. Technical Field

The present invention relates to a solar module for greenhouse. More particularly, the present invention relates to a greenhouse for growing plants and a plurality of solar panels installed on the top of the greenhouse.

2. Related Art

Greenhouse (or agriculture greenhouse) is an installation for growing plants in house. Traditionally, greenhouses are made by assembling brackets to build a hut and installing insect capture nets, glass, transparent plastic plates or covering transparent masks in order for sun to directly illuminate plants inside the greenhouse. Greenhouses are able to receive electromagnetic radiation heating from sun and slow down or isolate the convection of air inside and outside of the greenhouse. As a result, the air, water and soil inside of the greenhouse become warm and helpful to g row the plants.

Because the greenhouse can provide plants an individual natural environment to grow, it becomes more and more important for providing food in areas such as remote inland, mountain area, deserts or high-latitude area. However, many basic equipment for growing plants indoor, for example, plant cultivation light, watering device, fan and etc, need electricity, which cannot be easily obtained in remote inland, mountain area, deserts or high-latitude area. If the greenhouse cannot generate electricity itself, it is difficult to use greenhouse in areas stated above.

Taiwanese patent application 513914 and M341406 disclosed the technology of using solar panels for generating electricity in the greenhouse. However, those technologies fail to disclose in details the relatively best position and direction for solar panels to receive solar radiation. In addition, Chinese applications CN200420021500.5 and CN200710143184.7 disclosed that the solar panels were installed at the top of the roof. However, they failed to disclose the preferred direction for the solar panels to fully receive solar illumination in order to solve the issue that solar radiation cannot be fully received. Furthermore, planting areas of traditional greenhouses include dark planting areas for growing non-photosensitive plants and bright planting areas for growing photosensitive plants. Technologies stated above, besides providing electricity for greenhouses, do not provide any related strategies regarding structures for preventing, limiting or encouraging solar illumination for dark or bright planting areas. Therefore, technologies stated above need to be improved.

### BRIEF SUMMARY

The present utility mode has the purpose for providing a solar module for greenhouse for growing plants, capable of substantially improving the relative matching position between solar panels and dark or bright planting area of the greenhouse which has mentioned above and also capable of preventing, limiting or opening sunlight from or to illuminate the planting area in order to solve the issue that the solar panels are not efficient to receive the sun radiation because of the different installation position and different direction of the solar panels.

To achieve the purpose, the present utility model provides a solar module for greenhouse , comprising:

a greenhouse, forming a dark planting area for glowing non-photosensitive plants inside; and

a plurality of non-light transmitting solar panels, installed at the top of the greenhouse and arranged vertically and horizontally, to form a roof tilted in a particular light receiving direction and to separate the dark planting area from outside air, the roof can be made of plane surface or surface having some arc changes.

Thus, the roof of the greenhouse formed by non-light transmitting solar panels is used to form a greenhouse capable of growing non-photosensitive plants. Thus, the solar panels may prevent sunlight from directly illuminating the dark planting area. Thus, an integrated structure of solar panels, greenhouse and dark planting area is formed to save the construction expense for solar panels and greenhouse, and to provide an installation position and tilted direction for solar panels to receive sunlight illumination at the top of greenhouse in order to increase the efficiency for solar panels to receive sun radiation. Furthermore, the greenhouse becomes an electricity generating factory to increase the value of the location of greenhouse.

A shaft is installed on the top of the greenhouse in the direction of earth's southern and northern axis and extends to both side ends of the greenhouse, the solar panels are installed on the shaft and are driven by the shaft to swing in the direction of eastern and western position of the earth to a positioning angle of tracing sunlight in order to further increase the efficiency of solar panels to receive the solar radiation;

A reflective surface for reflecting sunlight to the dark planting area is installed at the bottom of the solar panels.

Furthermore, the present utility model further provides a solar module for greenhouse , comprising:

a greenhouse, forming a bright planting area for glowing photosensitive plants inside; and

a plurality of non-light transmitting solar panels, installed at the top of the greenhouse and arranged vertically and horizontally, to form a roof tilted in a particular light receiving direction and to separate the bright planting area from outside air, the roof can be made of plane surface or surface having some arc changes.

Thus, the roof of the greenhouse formed by non-light transmitting solar panels is used to form a greenhouse capable of growing photosensitive plants. Thus, the solar panels may let sunlight directly illuminate the bright planting area. Thus, an integrated structure of solar panels, the greenhouse and the bright planting area is formed to save the construction expense for solar panels and greenhouse, and to increase the efficiency for solar panels to receive sun radiation.

The solar panels are capable of letting light of particular wavelength go through in order for the solar panels directly limit sunlight to illuminate the bright planting area and thus, to increase the photosensitive plants' speed for growing, having flowering or fruits.

A shaft is installed on the top of the greenhouse in the direction of earth's southern and northern axis and extends to both side ends of the greenhouse, the solar panels are installed on the shaft and are driven by the shaft to swing in the direction of eastern and western position of the earth to a positioning angle of tracing sunlight in order to further increase the efficiency of solar panels to receive the solar radiation;

Furthermore, the greenhouse is located on the northern hemisphere surface of the earth and the particular light receiving direction is south; or the greenhouse is located on the southern hemisphere surface of the earth and the particular light receiving direction is north.

The plurality of plant breeding lights are installed at the top of planting area and the plant breeding lights are made of Light Emitting Diodes illuminating light of a particular wavelength.

The northern side of the greenhouse extends to form a sub-greenhouse to be connected with, a sub bright planting area for photosensitive plants is formed inside, and a light transmitting plane ceiling tilted to the north is formed at the top of the sub-greenhouse, separating the sub bright planting area from the outside air in order to increase the diversity of the plants growing in the greenhouse.

A vertical wall is linked with both adjacent side edges of the roof and the ceiling, and a fan capable of facilitating inside and outside air to circulate is installed on the vertical wall.

### BRIEF DESCRIPTION OF THE DRAWINGS

These and other features and advantages of the various embodiments disclosed herein will be better understood with respect to the following description and drawings, in which like numbers refer to like parts throughout, and in which:

FIG. 1 is one schematic illustration of installation of first embodiment of the present utility model;

FIG. 2 is one schematic illustration of installation of second embodiment of the present utility model;

FIG.3 is one schematic illustration of installation of embodiment in FIG.1 with additional devices;

FIG. 4 is an A-A cross-sectional view of FIG.2;

FIG.5 shows an usage state of FIG.4;

FIG.6 is one schematic illustration of installation of third embodiment of the present utility model.

FIG.7 is one schematic illustration of installation of fourth embodiment of the present utility model.

### DETAILED DESCRIPTION

Hereinafter, the present invention will be described in detail with reference to the accompanying drawings. It should be understood that drawings do not limit the scope of the present invention.

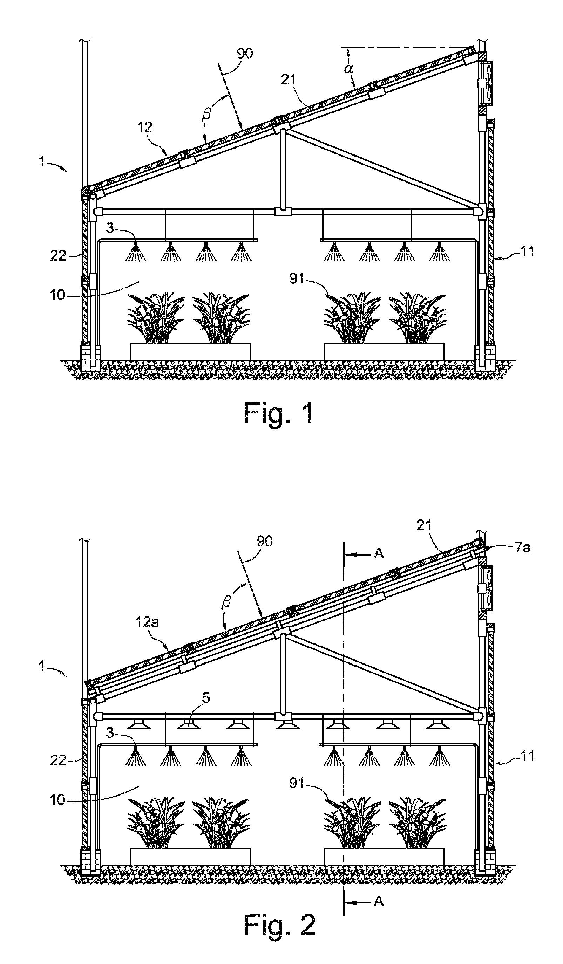

Please refer to FIG.1 which discloses one schematic illustration of installation of first embodiment of the present utility model. The solar module for greenhouse of the present utility model includes a greenhouse 1 and a plurality of non-light transmitting solar panels 21. The greenhouse 1 includes a dark planting area 10 for growing non-photosensitive plants 91 thereof. A plurality of sprinkler heads 3 are installed in the dark planting area 10 capable of watering the non-photosensitive plants 91 planted in the bottom of the dark planting area 10 to courage the plant to grow. Walls 11 of the greenhouse 1 may be formed by insect capture nets, plastic plates, glass or light transmitting solar panels 22 in order for preventing from strong winds, cold or insects. When walls 11 of the greenhouse 1 are made of light transmitting solar panels 22, the light transmitting solar panels 22 can be illuminated by sun to generate electricity in order to help provide electricity necessary for running the greenhouse 1. The non-light transmitting solar panels 21 are installed vertically and horizontally at the top of the greenhouse 1 and form a roof 12, which is tilted in a particular direction for receiving light and separates between the dark planting area 10 and the outside air. The roof 12 can be made into plane or to have some arc changes according to the outline of the roof 12. The roof 12 made of solar panels 21 can be able to prevent from outside strong winds, cold and insects. Actually, when the greenhouse 1 is located on the northern hemisphere surface of the earth, the particular direction is south. Or when the greenhouse 1 is located on the southern hemisphere surface of the earth, the particular direction is south. The surface can be land or above sea. The particular tilted angleαfor receiving the light can be from 10 to 60 degree and can be changed according to the latitude of southern and northern hemisphere. When the location of greenhouse 1 is closer to the equator, the tilted angleαis smaller. When the location of greenhouse 1 is further away from the equator, the tilted angleαis larger. Therefore, the angle β between the surface of solar panel 20 and sunlight 90 can be controlled to be equal to or towards 90 degree in order to increase the efficiency of solar panels 21 to receive solar radiation.

Because of the structure of the present utility mentioned above, the roof 12 of the greenhouse 1 can be tilted, especially in daytime, towards north or south on the southern or northern surface. Because the illumination intensity closer to equation is larger than that of northern or southern hemisphere away from equation, solar panels 21 are able to receive the direct illumination from sunlight of high intensity coming from direction of equation (as shown in FIG.1) to provide electricity necessary for running the greenhouse 1 (such as watering, ventilating or night illuminating). In addition, solar panels 21 can prevent outside sunlight from illuminating the dark planting area 10 and thus provide a suitable dark environment for non-photosensitive plants to grow.

The disclosure above fully discloses the necessary technology for the present utility model and particularly, discloses the roof 12 of greenhouse 1 formed by non-light transmitting solar panels 21 to form greenhouse 1 capable of growing non-photosensitive plants 91. Thus, the solar panels 21 may prevent sunlight from illuminating the dark planting area 10. Thus, an integrated structure of solar panels 21, greenhouse 1 and dark planting area 10 is formed to save the construction expense for solar panels 21 and greenhouse 1, and to provide an installation position and tilted direction for solar panels 21 to receive sunlight illumination at the top of greenhouse 1 in order to increase the efficiency for solar panels 21 to receive sun radiation. Furthermore, greenhouse 1 becomes an electricity generating factory to increase the value of the location of greenhouse 1.

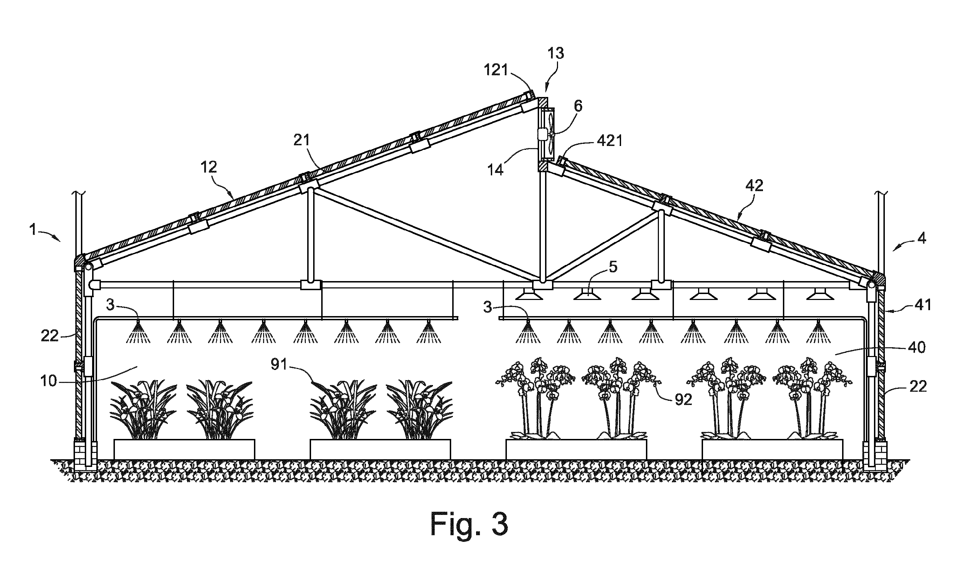

In another embodiment, greenhouse 1 can extend its north side to form a sub-greenhouse 4 connected with its inside portion (as shown in FIG 3). A sub bright planting area 49 for growing photosensitive plants 92 is created inside of sub-greenhouse 4. A plurality of sprinkler heads 3 are installed at the top of sub bright planting area 40 for watering photosensitive plants 92 planted at the bottom of the sub bright planting area 40. A plurality of plant breeding lights 5 are installed on the top of sub bright planting area 40. The plant breeding lights 5 can be made of one or more Light Emitting Diodes (LEDs) generating light of certain wavelength, which may include blue light, green light or red light. The wavelength of blue light can facilitate the plants to grow. The wavelength of red light can facilitate the plants to have flowers and fruits. The wavelength of green light can balance the development plants' speed for growing and having flowers and fruits. Walls 41 of the sub-greenhouse 4 can be made of insect capture nets, plastic plates, glass or light transmitting solar panels 22 capable of preventing from outside strong winds, cold and insects. When walls 41 of sub-greenhouse 4 can be photosensitive solar panels 22, solar panels 22 can receive the illumination of sun to generate electricity for helping provide electricity necessary for running greenhouse 1 and sub-greenhouse 4. A light transmitting flat ceiling 42 tilted north is installed on the top of sub-greenhouse 4. One top edge 121 of the roof 12 is close to a top edge 421 of the ceiling 42. The top edges 121 of the roof 12 and 421 of the ceiling 42 have a junction to be a ridge 13 tilted in the southern and northern direction. The ceiling 42 can be made of glass separating sub bright planting area 40 from outside air. The top edge 121 of the roof 12 is taller than the edge 421 of the ceiling 42. A vertical wall 14 is linked with both adjacent side edges of the roof 12 and the ceiling 42. The vertical wall 14 is located between the top edge 121 of the roof 12 and the top edge 421 of the ceiling 42. A fan 6 is installed on the vertical wall 14 to facilitate the air circulation in order to rapidly exhaust the heat to adjust the temperature of greenhouse 1 and sub-greenhouse 4. As a result, the diversity of plant cultivation is increased.

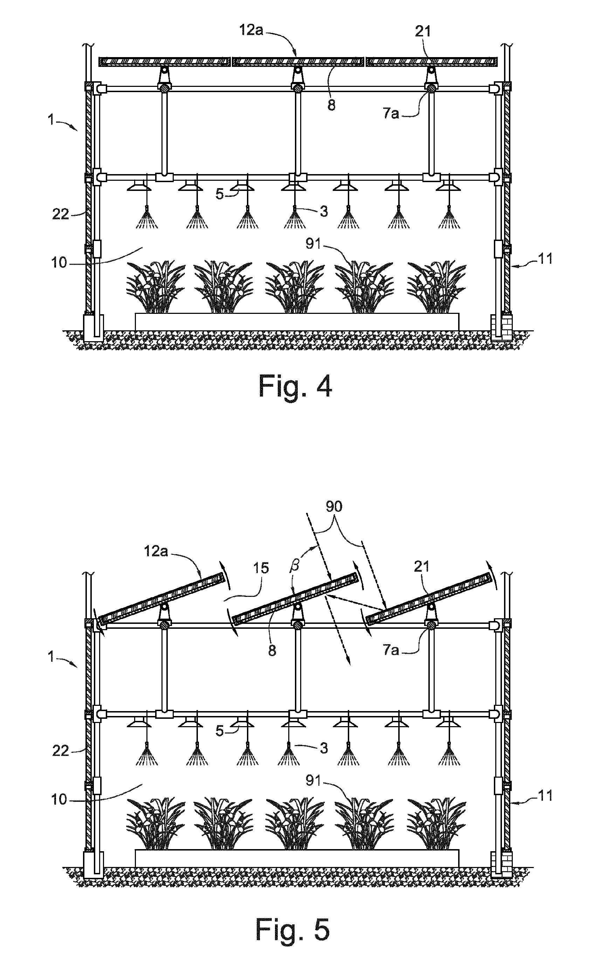

Please refer to FIG.2, which discloses one schematic illustration of installation of second embodiment of the present utility model, and FIG.4 to see the difference between the first embodiment and second embodiment. In the second embodiment, because the particular light receiving direction of the roof 12 of the greenhouse 1 is south or north and observing from the earth surface, sun rises from east of the sky and moves to west, a shaft 7a can be pivotally installed on the top of greenhouse 1 in the direction of earth's southern and northern axis. The shaft 7a extends to the southern and northern side ends of greenhouse 1. Actually, a plurality of shafts 7a can be installed on the top of greenhouse 1 and all shafts 7a can be all driven by a motor (not shown) on the greenhouse 1. The non-light transmitting solar panels 21 can be respectively installed on the top surface of a plurality of shafts 7a. The solar panels 21 can be arranged vertically and horizontally to form a roof 12a tilted in a particular direction for receiving light. Thus, when the sun illumination angle is changed, the motor can receive signal from an outside controller (not shown) and drive the shafts 7a, causing solar panels 21 to swing with the shafts 7a. As a result, solar panels 121 are controlled to swing in the eastern and western position to the positioning angle for tracing sunlight (as shown in FIG.5). The angle β between the surface of solar panels 21 and sunlight 90 can be equal to or towards 90 degree. Thus, solar panels 21 as roof 12a of the greenhouse 1 can be driven by shafts 7a to adjust the swinging angle to be capable of tracing sunlight. The efficiency of solar panels 21 for receiving sunlight radiation is increased.

Solar panels 21 can install a reflective surface 8 on its bottom surface (as shown in FIG.4). The reflective surface 9 can be a smooth surface made of non-light transmitting reflective material. When solar panels swing in the eastern or western direction to the positioning angle for tracing light, solar panels 21 of all shafts 7a form gaps 15 in between, which connect dark planting area 10 with outside. Because solar panels 21 are made of non-light transmitting material, solar panels 21 capable of reflecting light may reflect sunlight 90 to the reflective surface 8 (as shown in FIG.5). The sunlight 90 can then be reflected by the reflective surface 8 to the dark planting area 10 in order for the sunlight to reach the dark planting area 10. A plurality of plant breeding lights 5 may also be installed on the top of dark planting area 10. The other devices of the second embodiment may be the same as those of the first embodiment.

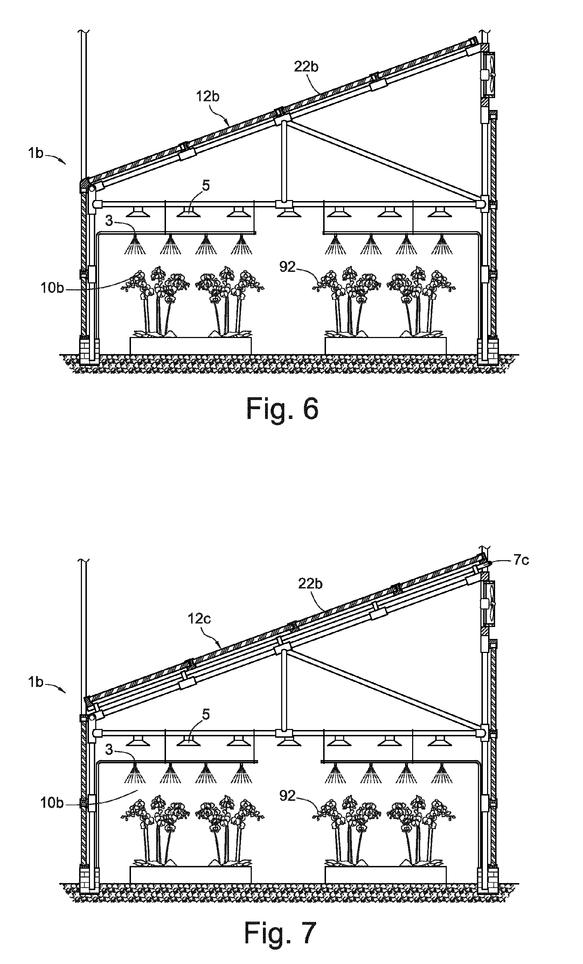

Please refer to FIG.6, which discloses one schematic illustration of installation of third embodiment of the present utility model. The panel module in this embodiment includes a greenhouse 1b and a plurality of light transmitting solar panels 22b. A bright planting area 10b for photosensitive plants can be formed inside of the greenhouse 1b. The light transmitting solar panels 22b can be installed on the top of the greenhouse 1b vertically and horizontally to form a roof 12b tilted in a particular light receiving direction, separating the bright planting area 10b and outside air. A plurality of plant breeding lights5 and sprinkler heads 3 are installed on the top of bright plant area 10b. The light transmitting solar panels 22, 22b may be a thin film solar cell of see-through type. Thus, the light transmitting solar panels 22b may form the roof 12b of the greenhouse 1b. A greenhouse 1b for photosensitive plants may be formed. The sunlight may go through the solar panels 22b to directly illuminate the bright plant area 10b. The solar panels 22b, greenhouse 1b and bright planting area 10b are formed to a unity to decrease the construction expensive of solar panels 22b and greenhouse 1b and to efficiently increase the efficiency of solar panels 22b to receive the solar radiation. All other devices of the third embodiment are the same as those of the first embodiment.

In another embodiment, the light transmitting solar panels 22b can be made of glass for light of particular wavelength (such as blue light, green light or red light) to go through (as shown in FIG.6). When light transmitting solar panels 22b only let light of particular wavelength to go through, they limit sunlight to illuminate bright planting area 10b. Thus, the speed of photosensitive plants 92 for growing, having flowers and fruits in the bright planting area 10b is increased.

Please refer to FIG. 7, which discloses one schematic illustration of installation of fourth embodiment of the present utility model. The difference between fourth embodiment and the third embodiment is mentioned below. In the fourth embodiment, a plurality of shafts 7c is pivotally installed on the top of the greenhouse 1b in the direction of south and north axis of the earth. The shaft 7c extends to the both side ends of the greenhouse 1b. The solar panels 22b are installed on the top surface of all shafts 7c and are arranged vertically and horizontally to form a roof 12c tilted in a particular light receiving direction. Thus, the solar panels 22b can be driven by the shafts 7c to swing in the direction of eastern and western position of the earth to a positioning angle for tracing sunlight in order to further increase the efficiency of solar panels 22b to receive the solar radiation. All other devices of this embodiment are the same as those of the second embodiment.

The above description is given by way of example, and not limitation. Given the above disclosure, one skilled in the art could devise variations that are within the scope and spirit of the invention disclosed herein, including configurations ways of the recessed portions and materials and/or designs of the attaching structures. Further, the various features of the embodiments disclosed herein can be used alone, or in varying combinations with each other and are not intended to be limited to the specific combination described herein. Thus, the scope of the claims is not to be limited by the illustrated embodiments.

## Claims

1. A solar module for greenhouse , comprising:
a greenhouse, forming a dark planting area for glowing non-photosensitive plants inside; and
a plurality of non-light transmitting solar panels, installed at the top of the greenhouse and arranged vertically and horizontally, to form a roof tilted in a particular light receiving direction and to separate the dark planting area from outside air.

2. The solar module for greenhouse according to claim 2, wherein a shaft is installed on the top of the greenhouse in the direction of earth's southern and northern axis and extends to both side ends of the greenhouse, the solar panels are installed on the shaft and are driven by the shaft to swing in the direction of eastern and western position of the earth to a positioning angle of tracing sunlight.

3. The solar module for greenhouse according to claim 1, wherein a reflective surface for reflecting sunlight to the dark planting area is installed at the bottom of the solar panels.

4. A solar module for greenhouse, comprising:
a greenhouse, forming a bright planting area for glowing photosensitive plants inside; and
a plurality of non-light transmitting solar panels, installed at the top of the greenhouse and arranged vertically and horizontally, to form a roof tilted in a particular light receiving direction and to separate the bright planting area from outside air.

5. The solar module for greenhouse according to claim 4, wherein the solar panels are capable of letting light of particular wavelength go through.

6. The solar module for greenhouse according to claim 4, wherein a shaft is installed on the top of the greenhouse in the direction of earth's southern and northern axis and extends to both side ends of the greenhouse, the solar panels are installed on the shaft and are driven by the shaft to swing in the direction of eastern and western position of the earth to a positioning angle of tracing sunlight

7. The solar module for greenhouse according to claim 1 or 4, wherein the greenhouse is located on the northern hemisphere surface of the earth and the particular light receiving direction is south.

8. The solar module for greenhouse according to claim 1 or 4, wherein the greenhouse is located on the southern hemisphere surface of the earth and the particular light receiving direction is north.

9. The solar module for greenhouse according to claim 1 or 4, wherein plurality of plant breeding lights are installed at the top of planting area and the plant breeding lights are made of Light Emitting Diodes illuminating light of a particular wavelength.

10. The solar module for greenhouse according to claim 1 or 4, wherein the northern side of the greenhouse extends to form a sub-greenhouse to be connected with, a sub bright planting area for photosensitive plants is formed inside, and a light transmitting plane ceiling tilted to the north is formed at the top of the sub-greenhouse, separating the sub bright planting area from the outside air.

11. The solar module for greenhouse according to claim 10, wherein a vertical wall is linked with both adjacent side edges of the roof and the ceiling, and a fan capable of facilitating inside and outside air to circulate is installed on the vertical wall.
